# EUROPÄISCHE PATENTSCHRIFT

(11) **EP 1 089 532 B1**
(45) Veröffentlichungstag und Bekanntmachung des Hinweises auf die Patenterteilung: **06.12.2006**
(21) Anmeldenummer: 00120015.3
(22) Anmeldetag: 14.09.2000
(51) Int. Cl.: H04M 3/42, H04M 3/51

(54) **Verfahren zum Anmelden einer Applikation an einer Kommunikationsanlage**
Method for registering an application in a communication system
Procédé pour enregister une application dans un système de communications

(30) Priorität: 28.09.1999 DE 19946503
(43) Veröffentlichungstag der Anmeldung: 04.04.2001
(73) Patentinhaber: SIEMENS AKTIENGESELLSCHAFT, 80333 München (DE)
(72) Erfinder: Zimmermann, Werner, Dr., 58708 Menden (DE)

(56) Entgegenhaltungen:
- DE-A1- 19 808 368
- US-A- 5 905 776
- "NetWare Telephony Services Application Programming Interface (TSAPI) Version 2, Issue 3.0, Chapter 4 Control Services" NOVELL INC., LUCENT TECHNOLOGIES INC., April 1998 (1998-04), XP002315439

## Beschreibung

Aus der Produktschrift "Sonderausgabe telcom report und Siemens Magazin Com: ISDN im Büro - HICOM", Siemens AG, Berlin und München, 1985, insbesondere der Seiten 58 bis 75 ist eine für eine zeitschlitz-basierte Informationsvermittlung, insbesondere Sprachdatenvermittlung ausgebildete Kommunikationsanlage HICOM bekannt. Ein Anschluß von Kommunikationsendgeräten, beispielsweise von Telefonen, an die Kommunikationsanlage erfolgt dabei über eine Mehrzahl von Teilnehmeranschlußports bereitstellende Teilnehmeranschlußeinheiten. Ein Anschluß an ein Kommunikationsnetz, beispielsweise ein ISDN-Kommunikationsnetz, erfolgt über eine in der Kommunikationsanlage angeordnete, einen Netzanschlußport bereitstellende Netzanschlußeinheit.

Durch eine in der Kommunikationsanlage angeordnete zentrale Steuereinheit wird die Informationsvermittlung in der Kommunikationsanlage gesteuert. Hierzu werden über die Anschlußports empfangene Steuerinformationen an die zentrale Steuereinheit der Kommunikationsanlage weitergeleitet und von dieser in entsprechende Steuerinformationen für die Kommunikationsanlage umgewandelt. So wird beispielsweise für eine Datenübermittlung zwischen zwei Kommunikationseinrichtungen über die Kommunikationsanlage durch die zentrale Steuereinheit ein Verbindungsweg über die, die entsprechenden Anschlußports bereitstellenden Teilnehmeranschlußeinheiten bzw. Netzanschlußeinheit und ein in der Kommunikationsanlage angeordnetes Koppelfeld geschaltet. Für eine Adressierung einer entsprechenden Kommunikationseinrichtung bzw. Anschlußport benötigt die zentrale Steuereinheit eine Information über die Existenz dieser Kommunikationseinrichtung bzw. dieses Anschlußports, d.h. eine Information über die dieser Kommunikationseinrichtung bzw. diesem Anschlußport zugeordnete Rufnummer. Hierbei ist jeder Kommunikationseinrichtung eine eindeutige Rufnummer zugeordnet. Die Koexistenz einer weiteren Kommunikationseinrichtung mit gleicher Rufnummer ist nicht möglich.

Im Zuge der Verschmelzung von Sprachverarbeitung und Datenverarbeitung sind häufig Datenverarbeitungseinrichtungen, wie z.B. 'Personal Computern' oder 'Workstations', an die Kommunikationsanlage angeschlossen. Ein Anschluß der Datenverarbeitungseinrichtungen an die Kommunikationsanlage erfolgt dabei in der Regel über ein Kommunikationsnetz - beispielsweise ein digitales ISDN-Kommunikationsnetz - oder über ein mit der Kommunikationsanlage verbundenes lokales Netzwerk LAN (Local Area Network). Für eine Steuerung einer Datenübermittlung über die Kommunikationsanlage laufen auf den Datenverarbeitungseinrichtungen jeweils eine bidirektionale Verbindung mit der Kommunikationsanlage initiierende Applikationen ab. Für ein Einrichten der Verbindung, d.h. für eine Bekanntmachen der Datenverarbeitungseinrichtung an der Kommunikationsanlage ist ein Anmelden der Datenverarbeitungseinrichtung gemäß bekannter Anmeldeprozeduren - in der Literatur häufig als Login bezeichnet - an der Kommunikationsanlage notwendig. Im Zuge der Anmeldung wird eine der Applikation zugeordnete Rufnummer und ein dem Benutzer zugeordnetes Paßwort an die den Anschluß des Datenverarbeitungseinrichtung an die Kommunikationsanlage realisierende Netzanschlußeinheit übermittelt. Stimmen die übermittelte Rufnummer und das Paßwort mit der in der Netzanschlußeinheit hinterlegten Rufnummer und dem dieser Rufnummer zugeordnet gespeicherten Paßwort überein, wird die Applikation in der Kommunikationsanlage als angemeldet verzeichnet. Durch die Zuordnung einer jeweiligen Rufnummer zu einer Applikation wird eine angemeldete Applikation durch die zentrale Steuereinheit der Kommunikationsanlage wie ein normaler aktivierter Anschlußport der Kommunikationsanlage behandelt.

Im Gegensatz zu den an der Kommunikationsanlage angeschlossenen Kommunikationsendgeräten ist es bei auf Datenverarbeitungseinrichtungen ablaufenden, eine Datenübermittlung über die Kommunikationsanlage steuernden Applikationen unter der selben Rufnummer sinnvoll, dass ein Teilnehmer dieselbe Applikation von unterschiedlichen Rechnern - beispielsweise im Rahmen des Teleworkings vom Büro oder dem Teleworking-Platz - aus an der Kommunikationsanlage anmeldet.

Die Druckschrift DE 198 08 368 A1 Wehrend "Verfahren und Anordnung zum Bereitstellen von Leistungsmerkmalen über ein Kommunikationsnetz" zeigt eine solche Teleworking-Lösung, bei der sich ein Teilnehmer über eine externe Wählleitung mit einer Kommunikationsanlage verbinden kann und nach einem Login-Vorgang die Leistungsmerkmale der Kommunikationsanlage wie an einem internen Kommunikationsgerät nutzten kann. Für die Dauer der "Teleworking-Sitzung" ist dabei dem externen Kommunikationsgerät eine interne Rufnummer zugeordnet.

Auch die Druckschrift US 5,905,776 Shaffer "System and method of co-ordinating communications for telecommuters" zeigt ein Verfahren und eine Anordnung zum Betrieb einer Teleworking-Applikation. Dabei sind einer Kommunikationsanlage lokal stellvertretende Module ("office-based station") zugeordnet, denen jeweils eine lokale Rufnummer eines Teilnehmers zugeordnet sind. Ein Teilnehmer kann sich von jedem beliebigen Telefon des öffentlichen Kommunikationsnetzwerks aus mit dem Stellvertreter-Modul verbinden und nach einer Authorisierung über das öffentliche Kommunikationsnetzwerk die Leistungsmerkmale eines internen Teilnehmers der Kommunikationsanlage nutzen.

Vergißt ein Teilnehmer die Applikation an der Kommunikationsanlage abzumelden, so gilt ein der angemeldeten Applikation durch die zentrale Steuereinheit der Kommunikationsanlage zugeordneter Anschlußport weiterhin als belegt und ein Anmelden derselben Applikation Rufnummer an der Kommunikationsanlage

Vergisst ein Teilnehmer die Applikation an der Kommunikationsanlage abzumelden, so gilt ein der angemeldeten Applikation durch die zentrale Steuereinheit der Kommunikationsanlage zugeordneter Anschlussport weiterhin als belegt und ein Anmelden derselben Applikation Rufnummer an der Kommunikationsanlage ausgehend von einem anderen Rechner unter der gleichen ist nicht möglich.

Der vorliegenden Erfindung liegt die Aufgabe zugrunde, ein Verfahren anzugeben, durch welches ein Anmelden einer Applikation unter der gleichen Rufnummer ausgehend von einem beliebigen Rechner ohne zuvoriges Abmelden der Applikation ermöglicht wird.

Die Lösung dieser Aufgabe erfolgt erfindungsgemäß mit den Merkmalen des Patentanspruchs 1.

Hierbei wird bei einem Anmelden einer aktuellen Applikation an einer Kommunikationsanlage mittels einer übermittelten applikationsspezifischen Rufnummer überprüft, ob bereits eine ältere Applikation unter derselben Rufnummer an der Kommunikationsanlage angemeldet ist. Die aktuelle und die ältere Applikation können dabei die gleichen, auf unterschiedlichen Datenverarbeitungseinrichtungen ablaufenden Applikationen, aber auch verschiedene, aufgrund einer gleichen Anmelderoutine sich an der Kommunikationsanlage gleich darstellende Applikationen sein. Ein Überschreiben der Anmeldung der älteren Applikation durch die Anmeldung der aktuellen Applikation in der Kommunikationsanlage erfolgt dabei nur in den Fällen, in denen die ältere Applikation aktuell nicht aktiv ist, d.h. nur wenn aktuell kein Verbindungsaufbau mit der bzw. durch die ältere Applikation initiiert wird oder keine Verbindung mit der älteren Applikation eingerichtet ist.

Ein wesentlicher Vorteil des erfindungsgemäßen Verfahrens besteht somit darin, dass auf einfache Weise ein Anmelden einer Applikation unter der gleichen Rufnummer ausgehend von einem beliebigen Rechner ohne zuvoriges Abmelden der Applikation ermöglicht wird.

Vorteilhafte Weiterbildungen der Erfindung sind in den Unteransprüchen angegeben.

Ein Vorteil von in den Unteransprüchen definierten Ausgestaltungen der Erfindung besteht unter anderem darin, daß für ein Anmelden einer Applikation an der Kommunikationsanlage zusätzlich zu einer der Applikation zugeordneten Rufnummer und einem teilnehmerindividuellen Paßwort eine der Applikation zugeordnet applikationsspezifische Lizenznummer übermittelt werden muß, wobei die Applikation nur dann als angemeldet gilt, wenn keine weitere Applikation mit derselben Lizenznummer bereits an der Kommunikationsanlage angemeldet ist. Somit kann auf einfache Weise ein mehrfaches Anmelden mit einer unauthorisierten Kopie der Applikation unterbunden werden.

Gemäß einer weiteren Ausgestaltung der Erfindung erfolgt ein Überschreiben der Anmeldung der älteren Applikation durch die Anmeldung der aktuellen Applikation nur in Fällen, in denen ein Benutzer der aktuellen Applikation auf die Existenz der älteren Applikation hingewiesen und der Benutzer durch eine explizite Bestätigung ein Überschreiben der älteren Applikation veranlaßt. Durch die zusätzliche Bestätigung kann ein versehentliches Überschreiben der Anmeldung der älteren Applikation auf einfache Weise vermieden werden.

Ein Ausführungsbeispiel der Erfindung wird im folgenden anhand der Zeichnung näher erläutert.

Dabei zeigen:
- Fig. 1:: ein Strukturbild zur schematischen Darstellung einer Kommunikationsanlage und von mit der Kommunikationsanlage verbundenen Datenverarbeitungseinrichtungen;
- Fig. 2:: ein Ablaufdiagramm zur Veranschaulichung der beim erfindungsgemäßen Verfahren ablaufenden wesentlichen Verfahrensschritte.

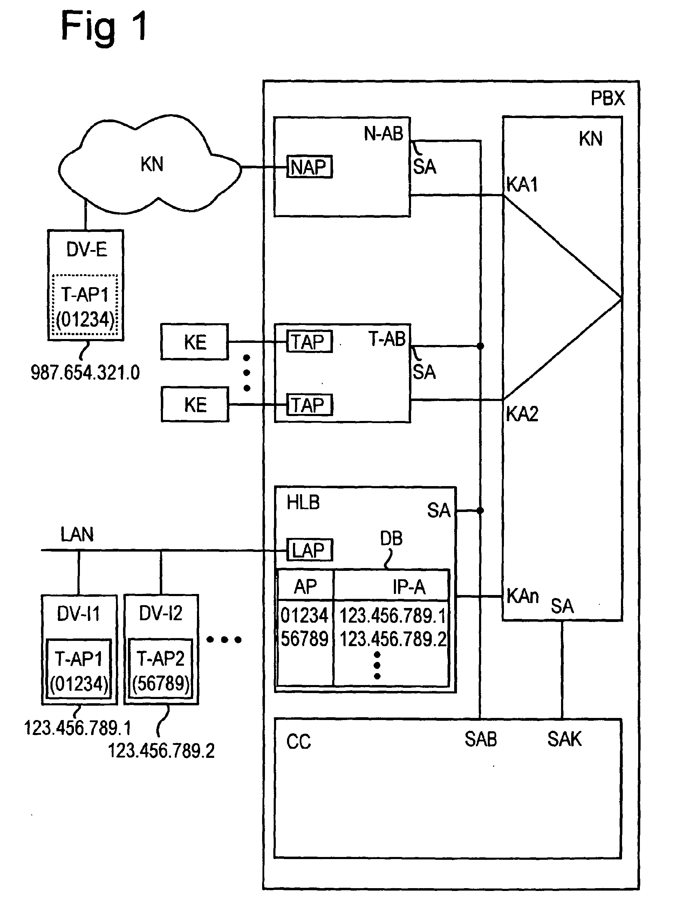

Fig. 1 zeigt eine schematische Darstellung einer Kommunikationsanlage PBX mit einer in dieser angeordneten, als LAN-Anschlußeinheit HLB ausgestalteten Baugruppe. Die Kommunikationsanlage PBX weist weitere Teilnehmer- bzw. Netzanschlußeinheiten - beispielhaft ist eine Teilnehmer-Anschlußeinheiten T-AB und eine Netz-Anschlußeinheit N-AB dargestellt - zum Anschluß von Kommunikationsendgeräten bzw. eines Kommunikationsnetzes an die Kommunikationsanlage PBX auf. Des weiteren beinhaltet die Kommunikationsanlage PBX ein mehrere bidirektionale, Zeitmultiplex-orientierte Koppel-Anschlüsse KA1,..., KAn aufweisendes Koppelfeldmodul KN, wobei die Zeitmultiplex-orientierten Koppel-Anschlüsse KA1,...,KAn als PCM-Anschlüsse (Puls Code Modulation) - auch als PCM-Highways, Speech-Highways oder S_{2M}-Anschlüsse bezeichnet - ausgestaltet sind. Jeder PCM-Highway umfaßt im allgemeinen zum einen 30 Nutzkanäle, welche jeweils als ISDN-orientierte B-Kanäle (Integrated Services Digital Network) mit einer Übertragungsrate von 64 kBit/s ausgestaltet sind und zum anderen einen Signalisierungskanal, welcher als ISDN-orientierter D-Kanal mit einer Übertragungsrate von 64 kBit/s ausgestaltet ist. Über einen Koppel-Anschluß KAn ist das Koppelfeldmodul KN mit einem bidirektionalen, Zeitmultiplex-orientierten Anschluß der LAN-Anschlußeinheit HLB verbunden. Über weitere Koppel-Anschlüsse KA1, KA2 ist das Koppelfeldmodul KN jeweils mit einem bidirektionalen, Zeitmultiplex-orientierten Anschluß der Netz-Anschlußeinheit N-AB und der Teilnehmer-Anschlußeinheit T-AB verbunden.

Des weiteren ist in der Kommunikationsanlage PBX eine mehrere Steueranschlüsse SA aufweisende zentrale Steuereinheit CC angeordnet. Über einen Steueranschluß SAK ist die zentrale Steuereinheit CC mit einem Steuereingang SA des Koppelfeldmoduls KN verbunden. Über einen weiteren Steueranschluß SAB ist die zentrale Steuereinheit CC über einen Steuerbus mit einem auf der LAN-Anschlußeinheit HLB angeordneten Steueranschluß SA und mit Steueranschlüssen SA der Teilnehmer-Anschlußeinheit T-AB und der Netz-Anschlußeinheit N-AB verbunden. Durch die zentrale Steuereinheit CC erfolgt dabei unter anderem eine Steuerung eines Verbindungsaufbaus zwischen zwei Anschlußeinheiten T-AB, N-AB, HLB über das Koppelfeldmodul KN für eine bidirektionale Datenübermittlung zwischen mit der Kommunikationsanlage PBX verbundenen internen bzw. externen Kommunikationseinrichtungen KE, DV.

An der Teilnehmer-Anschlußeinheit T-AB sind über Schnittstellen bereitstellende Teilnehmeranschlußports TAP interne Kommunikationsendgeräte KE an die Kommunikationsanlage PBX angeschlossen. Ein Anschluß von digitalen internen Kommunikationsendgeräten KE an die Kommunikationsanlage PBX erfolgt üblicherweise über S₀-Schnittstellen oder mittels daraus abgeleiteten Schnittstellen, wie beispielsweise Uₚ₀-Schnittstellen. Allgemein umfassen eine Uₚ₀- bzw. eine S₀-Schnittstelle zum einen 2 Nutzdatenkanäle, welche als ISDN-orientierte B-Kanäle mit einer Übertragungsbitrate von jeweils 64 kBit/s ausgestaltet sind und zum anderen einen Signalisierungskanal, welcher als ISDN-orientierter D-Kanal mit einer Übertragungsbitrate von 16 kBit/s ausgestaltet ist. Alternativ können analoge Kommunikationsendgeräte über a/b-Schnittstellen an die Kommunikationsanlage PBX angeschlossen werden.

An der Netz-Anschlußeinheit N-AB ist über einen eine Schnittstelle bereitstellenden Netzanschlußport NAP ein Kommunikationsnetz KN mit der Kommunikationsanlage PBX verbunden. Das Kommunikationsnetz KN ist beispielsweise ein ISDN-orientiertes Kommunikationsnetz, das über eine S_{2M}-Schnittstelle mit der Kommunikationsanlage PBX verbunden ist. An das Kommunikationsnetz KN ist eine externe Datenverarbeitungseinrichtung DV-E angeschlossen. Die externe Datenverarbeitungseinrichtung DV-E kann alternativ in einem Rechnernetz, z.B. dem 'Internet' angeordnet sein, das über einen Netzanbieter - in der Literatur häufig als Provider bezeichnet - mit dem Kommunikationsnetz KN verbunden ist. Der externen Datenverarbeitungseinrichtung DV-E ist für eine Adressierung eine eindeutige IP-Adresse 987.654.321.0 (Internet Protokoll) zugeordnet. In der externen Datenverarbeitungseinrichtung DV-E ist eine erste Telefonapplikation T-AP1 implementiert. Durch eine derartige Telefonapplikation T-AP stehen einem Benutzer der externen Datenverarbeitungseinrichtung DV-E alle Funktionsmerkmale - häufig auch als 'Features' bezeichnet - eines herkömmlichen Telefons zur Verfügung. In der Literatur wird eine derartige Telefonapplikation deshalb häufig auch als virtuelles Telefon bezeichnet. Die Verwendung einer derartige Telefonapplikation T-AP setzt jedoch die Ausgestaltung der externen Datenverarbeitungseinrichtung DV-E mit einer sogenannten 'Soundkarte' zum Anschluß geeigneter Sprach-Eingabemittel - z.B. eines Mikrofons - und Sprach-Ausgabemittel - z.B. eines Lautsprechers - an die externe Datenverarbeitungseinrichtung DV-E voraus. Der in der externen Datenverarbeitungseinrichtung DV-E implementierten ersten Telefonapplikation T-AP1 ist eine applikationsspezifische Rufnummer 01234 zugeordnet, wobei die erste Telefonapplikation T-AP1 aktuell nicht aktiv ist - durch die gestrichelte Linie angedeutet -, d.h. nicht an der Kommunikationsanlage PBX angemeldet.

Über eine Schnittstelle der LAN-Anschlußeinheit HLB ist an die Kommunikationsanlage PBX zusätzlich ein lokales Netzwerk LAN (Local Area Network) angeschlossen. Im lokalen Rechnernetz LAN sind beispielhaft mehrere interne Datenverarbeitungseinrichtungen DV-I angeordnet, wobei auf den internen Datenverarbeitungseinrichtungen DV-I analog zur externen Datenverarbeitungseinrichtung DV-E jeweils eine Telefonapplikation T-AP implementiert ist. Hierbei ist in einer ersten internen Datenverarbeitungseinrichtung DV-I1 ebenfalls die erste Telefonapplikation T-AP1 und in einer zweiten internen Datenverarbeitungseinrichtung DV-I2 eine zweite Telefonapplikation T-AP2 implementiert. Der ersten Telefonapplikation T-AP1 ist wiederum die applikationsspezifische Rufnummer 01234 und der zweiten Telefonapplikation T-AP2 ist eine applikationsspezifische Rufnummer 56789 zugeordnet. Sowohl die erste Telefonapplikation T-AP1 als auch die zweite Telefonapplikation T-AP2 sind aktuell aktiv - durch die durchgezogene Linie angedeutet -, d.h. an der Kommunikationsanlage PBX angemeldet. Für eine Adressierung ist der ersten internen Datenverarbeitungseinrichtung DV-I1 die eindeutige IP-Adresse 123.456.789.1 und der zweiten internen Datenverarbeitungseinrichtung DV-I2 die IP-Adresse 123.46.789.2 zugeordnet.

Eine Übermittlung von sprachorientierten Daten im Rahmen der ersten bzw. zweiten Telefonapplikation T-AP1, T-AP2 über das lokale Netzwerk LAN erfolgt dabei beispielsweise auf Basis der, auf dem bekannten TCP/IP-Protokoll (Transmission Control Protokoll / Internet Protokoll) basierenden Protokolle H.323 bzw. H.320.

Nach einer Anmeldung der auf einer Datenverarbeitungseinrichtung DV laufenden Telefonapplikation T-AP an der Kommunikationsanlage PBX wird die Telefonapplikation T-AP durch die zentrale Steuereinheit CC wie ein herkömmliches internes Kommunikationsendgerät KE behandelt. Für eine Anmeldung einer Telefonapplikation T-AP an der Kommunikationsanlage PBX ist jeder Telefonapplikation T-AP ein eindeutige Rufnummer zugeordnet. Wie schon beschrieben ist der ersten Telefonapplikation T-AP1 die Rufnummer 01234 und der zweiten Telefonapplikation T-AP2 die Rufnummer 56789 zugeordnet. In der LAN-Anschlußeinheit HLB der Kommunikationsanlage PBX ist für jede Telefonapplikation T-AP, d.h. für alle auf einer internen oder externen Datenverarbeitungseinrichtung DV-I, DV-E eingerichteten Telefonapplikationen T-AP die jeweilige applikationsspezifische Rufnummer und zugeordnet ein zugeordnetes Paßwort hinterlegt. Zusätzlich ist für jede angemeldete Telefonapplikation jeweils eine der Telefonapplikation T-AP zugeordnete, im Rahmen der Anmeldung übermittelte, applikationsspezifische Lizenznummer gespeichert.

Des weiteren wird nach einer Anmeldung einer Telefonapplikation T-AP in einer Datenbasis DB der LAN-Anschlußeinheit HLB eine der Telefonapplikation T-AP zugeordnete Anmeldeinformation gesetzt, die anzeigt, daß ein der Telefonapplikation T-AP zugeordneter Applikationsport AP der Kommunikationsanlage PBX aktiviert ist. Beispielhaft sind Anmeldeinformationen für die auf der ersten internen Datenverarbeitungseinrichtung DV-I1 ablaufende erste Telefonapplikation T-AP1 und für die auf der zweiten internen Datenverarbeitungseinrichtung DV-I2 ablaufende zweite Telefonapplikation T-AP2 dargestellt. Die Anmeldeinformationen enthalten jeweils die der Telefonapplikation T-AP zugeordnete applikationsspezifische Rufnummer 01234, 56789 und die für eine Adressierung der jeweiligen Telefonapplikation T-AP1, T-AP2 notwendige Adreßinformation, insbesondere eine IP-Adresse IP-A (Internet Protokoll). Im vorliegenden Ausführungsbeispiel ist für die erste Telefonapplikation T-AP1 die IP-Adresse IP-A = 123.456.789.1 und für die zweite Telefonapplikation T-AP2 die IP-Adresse IP-A = 123.456.789.2 in der Datenbasis DB der LAN-Anschlußeinheit HLB gespeichert. Zusätzlich wird nach einer erfolgreichen Anmeldung der ersten und der zweiten Telefonapplikation T-AP1, T-AP2 an der LAN-Anschlußeinheit der zugehörige Anschlußport der Kommunikationsanlage PBX durch einen entsprechenden Eintrag in einer - nicht dargestellten - Datenbasis der zentralen Steuereinheit CC der Kommunikationsanlage PBX aktiviert.

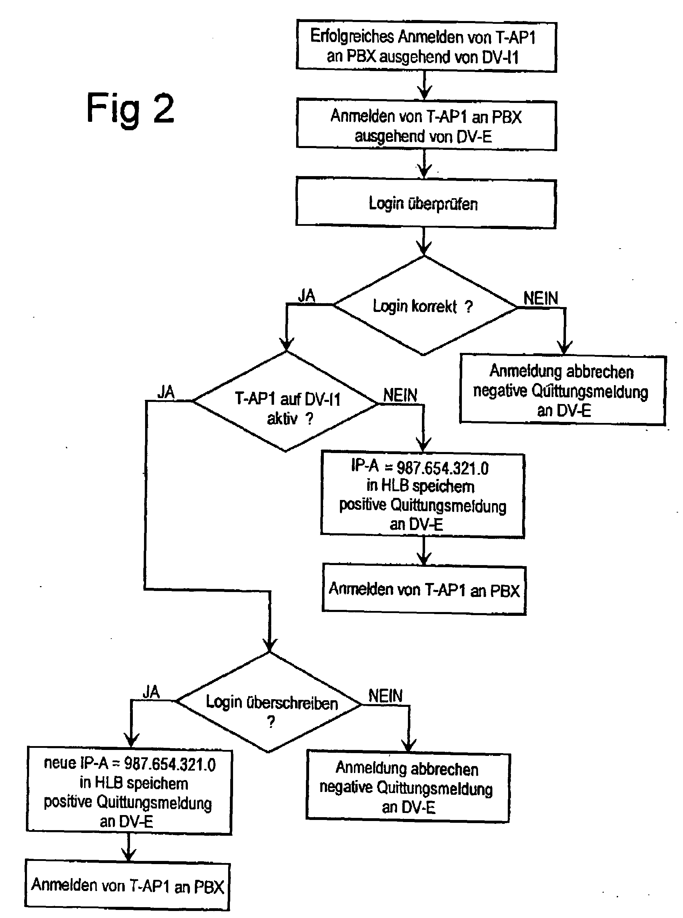

Fig. 2 zeigt ein Ablaufdiagramm zur Veranschaulichung der bei einem Anmelden der ersten Telefonapplikation T-AP1 ausgehend von unterschiedlichen Datenverarbeitungseinrichtungen ablaufenden wesentlichen Verfahrensschritte. Startet ein Teilnehmer die erste Telefonapplikation T-AP1 an der ersten internen Datenverarbeitungseinrichtung DV-I1 wird in einem ersten Schritt eine Verbindung zwischen der ersten internen Datenverarbeitungseinrichtung DV-I1 und der Kommunikationsanlage PBX über das lokale Netzwerk LAN aufgebaut. Die Anmeldung erfolgt dabei an der LAN-Anschlußeinheit HLB der Kommunikationsanlage PBX und kann auf einfache Weise z.B. durch Anwählen eines bestimmten Anschlußports der Kommunikationsanlage PBX erfolgen.

Im Rahmen der Anmeldeprozedur - in der Literatur häufig als Login bezeichnet - der ersten Telefonapplikation T-AP1 erfolgt aus sicherheitstechnischen Gründen durch die LAN-Anschlußeinheit HLB sowohl eine Identifizierungsüberprüfung der ersten Telefonapplikation T-AP1 als auch zusätzlich eine Authentifizierungsüberprüfung des die erste Telefonapplikation T-AP1 nutzenden Teilnehmers. Hierzu wird für die Identifizierung die der ersten Telefonapplikation T-AP1 zugeordnete applikationsspezifische Rufnummer 01234 an die LAN-Anschlußeinheit HLB übermittelt. Für die Authentifizierung des Teilnehmers wird ein teilnehmerindividuelles Paßwort an die LAN-Anschlußeinheit HLB der Kommunikationsanlage PBX übermittelt. Zusätzlich ist vorgesehen die der ersten Telefonapplikation T-AP1 zugeordnete Lizenznummer an die LAN-Anschlußeinheit HLB zu übermitteln. Die erste Telefonapplikation T-AP1 gilt dabei nur dann als angemeldet, wenn noch keine Telefonapplikation T-AP mit derselben Lizenznummer an der Kommunikationsanlage PBX angemeldet ist. Somit kann auf einfache Weise ein mehrfaches Anmelden mit einer unauthorisierten Kopie einer Telefonapplikation T-AP unterbunden werden.

Anhand einer auf der LAN-Anschlußeinheit HLB angeordneten - nicht dargestellten - Datenbasis, welche die berechtigten Rufnummern, die teilnehmerindividuellen Paßwörter und bei bereits angemeldeten Telefonapplikationen T-AP die den angemeldeten Telefonapplikationen T-AP zugeordneten Lizenznummern LN enthält, findet eine Überprüfung der Anmeldung der ersten Telefonapplikation T-AP1 statt. Stimmen die Anmeldedaten nicht überein wird die Anmeldung abgebrochen und eine den Abbruch signalisierende negative Quittungsmeldung an die erste interne Datenverarbeitungseinrichtung DV-I1 übermittelt. Stimmt dagegen das, der übermittelten Rufnummer der ersten Telefonapplikation T-AP1 in der Datenbasis als zugeordnet gespeicherte Paßwort mit dem übermittelten Paßwort überein, ist die Anmeldung bestätigt und die erste Telefonapplikation T-AP1 wird in der Datenbasis DB der LAN-Anschlußeinheit HLB durch den Eintrag einer entsprechenden Anmeldeinformation bestehend aus applikationsspezifischer Rufnummer 01234 und IP-Adresse IP-A = 123.456.789.1 als angemeldet vermerkt. Zusätzlich wird der entsprechende Anschlußport der Kommunikationsanlage PBX durch eine Meldung der LAN-Anschlußeinheit HLB an die zentrale Steuereinheit CC der Kommunikationsanlage PBX durch einen entsprechenden Eintrag in einer - nicht dargestellten - Datenbasis der zentralen Steuereinheit CC aktiviert. Somit gilt ein der ersten Telefonapplikation T-AP1 zugeordneter Applikationsport AP = 01234 der Kommunikationsanlage PBX in der zentralen Steuereinheit CC als aktiviert. Zusätzlich wird eine die Anmeldung signalisierende positive Quittungsmeldung an die erste interne Datenverarbeitungseinrichtung DV-I1 übermittelt.

Startet der Teilnehmer oder ein anderer Teilnehmer nun zu einem späteren Zeitpunkt erneut die erste Telefonapplikation T-AP1 an der externen Datenverarbeitungseinrichtung DV-E wird eine Verbindung zwischen der externen Datenverarbeitungseinrichtung DV-E und der Kommunikationsanlage PBX über das Kommunikationsnetz KN aufgebaut und die Anmeldeprozedur für die externe Datenverarbeitungseinrichtung DV-E wird analog zu dem oben beschriebenen Verfahren ausgeführt.

Ist die auf der ersten internen Datenverarbeitungseinrichtung DV-I1 laufende erste Telefonapplikation T-AP1 weiterhin an der Kommunikationsanlage PBX angemeldet, da der Teilnehmer beispielsweise vergessen hat die erste Telefonapplikation T-AP1 an der ersten internen Datenverarbeitungseinrichtung DV-I1 abzumelden, wird durch die LAN-Anschlußeinheit HLB überprüft, ob die auf der ersten internen Datenverarbeitungseinrichtung DV-I1 laufende erste Telefonapplikation T-AP1 aktuell aktiv ist. Hierfür wird durch die LAN-Anschlußeinheit HLB überprüft, ob aktuell ein Verbindungsaufbau mit der bzw. durch die auf der ersten internen Datenverarbeitungseinrichtung DV-I1 laufende erste Telefonapplikation T-AP1 initiiert wird oder ob eine bestehende Verbindung mit der auf der ersten internen Datenverarbeitungseinrichtung DV-I1 laufenden ersten Telefonapplikation T-AP1 eingerichtet ist. Alternativ kann vorgesehen sein, daß eine Telefonapplikation T-AP in den Fällen als nicht aktiv ermittelt wird, in denen während einer vorgegebenen bzw. einstellbaren Zeitspanne vor der Anmeldung keine Verbindung mit der Telefonapplikation T-AP eingerichtet wurde. Wird die auf der ersten internen Datenverarbeitungseinrichtung DV-I1 laufende erste Telefonapplikation T-AP1 als nicht aktiv ermittelt, wird die in der Datenbasis DB der LAN-Anschlußeinheit HLB gespeicherte IP-Adresse IP-A = 123.456.789.1 der ersten internen Datenverarbeitungseinrichtung DV-I1 mit der IP-Adresse IP-A = 987.654.321.0 der externen Datenverarbeitungseinrichtung DV-E überschrieben und eine positive Quittungsmeldung an die externe Datenverarbeitungseinrichtung DV-E übermittelt. Durch die Übermittlung einer entsprechenden Nachricht von der LAN-Anschlußeinheit HLB an die zentrale Steuereinheit CC der Kommunikationsanlage PBX werden die in der zentralen Steuereinheit CC hinterlegten Daten entsprechend aktualisiert.

Wird die auf der ersten internen Datenverarbeitungseinrichtung DV-I1 laufende erste Telefonapplikation T-AP1 dagegen als aktuell aktiv ermittelt, wird eine die Existenz der auf der ersten internen Datenverarbeitungseinrichtung DV-I1 laufenden ersten Telefonapplikation T-AP1 anzeigende Nachricht an die externe Datenverarbeitungseinrichtung DV-E übermittelt. Übermittelt ein Benutzer der externen Datenverarbeitungseinrichtung DV-E eine Bestätigungsnachricht zum Überschreiben der auf der ersten internen Datenverarbeitungseinrichtung DV-I1 laufenden ersten Telefonapplikation T-AP1 wird die in der Datenbasis DB der LAN-Anschlußeinheit HLB gespeicherte IP-Adresse IP-A = 123.456.789.1 der ersten internen Datenverarbeitungseinrichtung DV-I1 durch die IP-Adresse IP-A = 987.654.321.0 der externen Datenverarbeitungseinrichtung DV-E überschrieben. Durch die Übermittlung einer entsprechenden Nachricht von der LAN-Anschlußeinheit HLB an die zentrale Steuereinheit CC der Kommunikationsanlage PBX werden die in der zentralen Steuereinheit CC hinterlegten Daten entsprechend aktualisiert. Wird an der LAN-Anschlußeinheit HLB dagegen innerhalb einer vorgegebenen Zeitspanne keine Bestätigungsmeldung empfangen, wird die Anmeldung abgebrochen und es wird eine negative Quittungsmeldung an die externe Datenverarbeitungseinrichtung DV-E übermittelt.

## Patentansprüche

1. Verfahren zum Anmelden einer auf einer Datenverarbeitungseinrichtung (DV) ablaufenden aktuellen Applikation (T-AP1) an einer Kommunikationsanlage (PBX) mittels einer applikationsspezifischen Rufnummer (01234),
bei dem mittels der Rufnummer (01234) überprüft wird, ob eine ältere Applikation (T-AP1) unter derselben Rufnummer (01234) bereits an der Kommunikationsanlage (PBX) angemeldet ist, **dadurch gekennzeichnet, dass**
in Fällen, in denen dies zutrifft, überprüft wird, ob die ältere Applikation (T-AP1) aktuell aktiv ist, und
in Fällen, in denen die ältere Applikation (T-AP1) aktuell nicht aktiv ist, eine Anmeldungsinformation der älteren Applikation (T-AP1) durch eine Anmeldungsinformation der aktuellen Applikation (T-AP1) ersetzt wird,
wobei eine Applikation (T-AP1) in den Fällen als aktiv ermittelt wird, in denen aktuell ein Verbindungsaufbau mit der bzw. durch die Applikation (T-AP1) initiiert wird oder eine bestehende Verbindung mit der Applikation (T-AP1) eingerichtet ist,
wobei as sich bei der Verbindung um eine bidirektionale Datenübermittlung über ein mehrere bidirektionale, Zeitmultiplex-orientierte koppel-Anschlüsse aufweisendes koppelfeldmodul handelt.

2. Verfahren nach Anspruch 1,
**dadurch gekennzeichnet,**
**daß** in Fällen, in denen die ältere Applikation (T-AP1) aktiv ist, eine die Existenz der älteren Applikation (T-AP1) anzeigende Nachricht an die aktuelle Applikation (T-AP1) übermittelt wird, und
**daß** nach Empfang einer Bestätigungsmeldung an der Kommunikationsanlage (PBX) die Anmeldungsinformation der älteren Applikation (T-AP1) durch die Anmeldungsinformation der aktuellen Applikation (T-AP1) ersetzt wird.

3. Verfahren nach Anspruch 1 oder 2,
**dadurch gekennzeichnet,**
**daß** in der Kommunikationsanlage (PBX) für eine angemeldete Applikation (T-AP1) die applikationsspezifische Rufnummer (01234) und eine für die Adressierung der Applikation (T-AP1) notwendige Adreßinformation (IP-A) gespeichert wird.

4. Verfahren nach Anspruch 3,
**dadurch gekennzeichnet,**
**daß** für ein Ersetzen der Anmeldungsinformation der älteren Applikation (T-AP1) durch die Anmeldungsinformation der aktuellen Applikation (T-AP1) die Adreßinformation (IP-A) der älteren Applikation (T-AP1) durch die Adreßinformation (IP-A) der aktuellen Applikation (T-AP1) ersetzt wird.

5. Verfahren nach Anspruch 3 oder 4,
**dadurch gekennzeichnet,**
**daß** die Adreßinformation (IP-A) durch eine IP-Adresse (Internet Protokoll) gebildet wird.

6. Verfahren nach einem der Ansprüche 1 bis 5,
**dadurch gekennzeichnet,**
**daß** eine Applikation (T-AP1) in den Fällen als nicht aktiv ermittelt wird, in denen innerhalb einer vorgegebenen Zeitspanne vor der Anmeldung keine Verbindung mit dieser Applikation (T-AP1) eingerichtet wurde.

7. Verfahren nach einem der vorhergehenden Ansprüche,
**dadurch gekennzeichnet,**
**daß** für eine Anmeldung der Applikation (T-AP1) die der Applikation (T-AP) zugeordnete applikationsspezifische Rufnummer (01234) und ein teilnehmerindividuelles Paßwort an die Kommunikationsanlage (PBX) übermittelt werden.

8. Verfahren nach Anspruch 7,
**dadurch gekennzeichnet,**
**daß** für eine Anmeldung zusätzlich eine der Applikation (T-AP1) zugeordnete applikationsspezifische Lizenznummer übermittelt wird.

9. Verfahren nach einem der vorhergehenden Ansprüche,
**dadurch gekennzeichnet,**
**daß** die Applikation (T-AP1) eine die Leistungsmerkmale eines herkömmlichen Telefons aufweisende, eine Datenübermittlung über die Kommunikationsanlage (PBX) steuernde Telefonapplikation ist.

## Claims

1. Method for registering a current application (T-AP1) running on a data processing device (DV) in a communications system (PBX) by means of an application-specific directory number (01234),
in which a check is made by means of the directory number (01234) whether an older application (T-AP1) has already been registered in the communications system (PBX) under the same directory number (01234), **characterized in that**
in cases where this is so, a check is made whether the older application (T-AP1) is currently active and in cases in which the older application (T-AP1) is currently not active, a registration information of the older application (T-AP1) is replaced by registration information of the current application (T-AP1), wherein an application (T-AP1) is determined to be active in cases in which a connection setup is currently initiated with the or by the application (T-AP1) or an existing connection with the application (T-AP1) is set up,
wherein the connection is a bidirectional data transmission via a switching network module having a number of bidirectional time-division-multiplex-oriented switching ports.

2. Method according to Claim 1, **characterized in that** in cases in which the older application (T-AP1) is active, a message indicating the existence of the older application (TAP1) is transmitted to the current application (T-AP1), and that after reception of an acknowledgment message in the communications system (PBX), the registration information of the older application (T-AP1) is replaced by the registration information of the current application (T-AP1).

3. Method according to Claim 1 or 2, **characterized in that** the application-specific directory number (01234) and address information (IP-A) necessary for addressing the application (TAP1) is stored for a registered application (T-AP1) in the communications system (PBX).

4. Method according to Claim 3, **characterized in that** for replacing the registration information of the older application (T-AP1) by the registration information of the current application (T-AP1), the address information (IP-A) of the older application (T-AP1) is replaced by the address information (IP-A) of the current application (T-AP1).

5. Method according to Claim 3 or 4, **characterized in that** the address information (IP-A) is formed by an IP (Internet protocol) address.

6. Method according to one of Claims 1 to 5, **characterized in that** an application (T-AP1) is determined as not being active in the cases in which no connection to this application (T-AP1) has been set up within a predetermined period of time before the registration.

7. Method according to one of the preceding claims, **characterized in that** for a registration of the application (T-AP1), the application-specific directory number (01234) allocated to the application (T-AP) and a subscriber-related password are transmitted to the communications system (PBX).

8. Method according to Claim 7, **characterized in that** for a registration, an application-specific licence number allocated to the application (T-AP1) is additionally transmitted.

9. Method according to one of the preceding claims, **characterized in that** the application (T-AP1) is a telephone application having the features of a conventional telephone and controlling a data transmission via the communications system (PBX).

## Revendications

1. Procédé d'enregistrement d'une application en cours (T-AP1), se déroulant sur un système de traitement de données (DV), dans un système de communication (PBX) au moyen d'un numéro d'appel (01234) spécifique à l'application, procédé dans lequel :
on vérifie au moyen du numéro d'appel (01234) si une ancienne application (T-AP1) est déjà demandée avec le même numéro (01234) dans le système de communication (PBX),
**caractérisé en ce que**
si c'est le cas, on vérifie si l'ancienne application (T-AP1) est actuellement active, et
si l'ancienne application (T-AP1) est actuellement inactive, une information d'enregistrement de l'ancienne application (T-AP1) est remplacée par une information d'enregistrement de l'application en cours (T-AP1),
une application (T-AP1) est considérée comme active si l'on a amorcé l'établissement d'une connexion avec l'application (T-AP1) respectivement par le biais de l'application (T-AP1) ou si une connexion existante est établie avec l'application (T-AP1),
la connexion étant une transmission bidirectionnelle par le biais d'un module de réseau de connexion multiple comportant plusieurs bornes de connexion bidirectionnelles à multiplexage temporel.

2. Procédé selon la revendication 1, **caractérisé en ce que**
si l'ancienne application (T-AP1) est active, un message indiquant l'existence de l'ancienne application (T-AP1) est transmis à l'application en cours (T-AP1), et **en ce que**
après réception d'un message de confirmation dans le système de communication (PBX), l'information d'enregistrement de l'ancienne application (T-AP1) est remplacée par l'information d'enregistrement de l'application en cours (T-AP1).

3. Procédé selon la revendication 1 ou 2, **caractérisé en ce que** le numéro d'appel (01234) spécifique à l'application et une information d'adresse (IP-A) nécessaire à l'adressage de l'application (T-AP1) sont mémorisés dans le système de communication (PBX) pour une application enregistrée (T-AP1).

4. Procédé selon la revendication 3, **caractérisé en ce que** l'information d'adresse (IP-A) de l'ancienne application (T-AP1) est remplacée par l'information d'adresse (IP-A) de l'application en cours (T-AP1) afin de remplacer l'information d'enregistrement de l'ancienne application (T-AP1) par l'information d'enregistrement de l'application en cours (T-AP1).

5. Procédé selon la revendication 3 ou 4, **caractérisé en ce que** l'information d'adresse (IP-A) est formée par une adresse IP (Internet Protocol).

6. Procédé selon l'une des revendications 1 à 5, **caractérisé en ce qu'**une application (T-AP1) est considérée comme inactive si aucune connexion n'est établie avec cette application (T-AP1) dans un laps de temps prescrit avant l'enregistrement.

7. Procédé selon l'une des revendications précédentes, **caractérisé en ce que**, pour effectuer un enregistrement de l'application (T-AP1), le numéro d'appel (01234), spécifique à l'application et associé à l'application (T-AP1), et un mot de passe propre à un abonné sont transmis au système de communication (PBX).

8. Procédé selon la revendication 7, **caractérisé en ce que**, pour effectuer un enregistrement, on transmet en plus un numéro de licence spécifique à l'application et associé à l'application (T-AP1).

9. Procédé selon l'une des revendications précédentes, **caractérisé en ce que** l'application (T-AP1) est une application téléphonique ayant les performances d'un téléphone classique et commandant une transmission de données par le biais du système de communication (PBX).
